# EUROPEAN PATENT SPECIFICATION

(11) **EP 4 281 370 B1**
(45) Date of publication and mention of the grant of the patent: **23.10.2024**
(21) Application number: 22701243.2
(22) Date of filing: 20.01.2022
(51) Int. Cl.: B64D 27/30, B64D 27/31, B64D 27/355, B60L 50/71, B60L 58/40, B64C 7/00, B64U 50/19, B64D 37/30

(54) **AIRCRAFT PROPULSION MODULE AND AIRCRAFT**
FLUGZEUG MIT ELEKTRISCHEM ANTRIEBSMODUL
AÉRONEF AVEC MODULE DE PROPULSION ÉLECTRIQUE

(30) Priority: 22.01.2021 EP 21153046
(43) Date of publication of application: 29.11.2023
(73) Proprietor: Blue Spirit Aero SAS, 92500 Rueil-Malmaison (FR)
(72) Inventor: VINCEKOVIC, David, Woodville, SA 5011 (AU); PASQUIET, Florian, 30650 Rochefort du Gard (FR); SAVIN, Olivier, 92500 Rueil-Malmaison (FR)
(74) Representative: Schulze, Mark
(86) International application number: PCT/EP2022/051227
(87) International publication number: WO 2022/157241

(56) References cited:
- WO-A1-2020/003181
- WO-A1-2020/060488
- DE-U1- 202020 005 286
- FR-A1- 3 097 201
- GB-A- 2 538 982
- US-A- 3 777 420
- US-A- 5 106 035
- US-A1- 2008 261 084

## Description

The present invention relates to an aircraft propulsion module comprising a hydrogen storage system, at least one electrochemical converter connected to the hydrogen storage system, wherein the at least one electrochemical converter is adapted to convert hydrogen supplied from the hydrogen storage system into electric energy, and at least one electric motor electrically connected to the at least one electrochemical converter, wherein the electric motor is adapted to generate thrust. The present invention also relates to an aircraft comprising at least one such propulsion module. The present invention further relates to a method of operating such a propulsion module.

In the context of aviation, modules may be defined as airborne equipment anchored to a dedicated point on the aircraft's structure. Mainly used in the military field, they can provide different functions such as extension of the fuel capacity or weapons and external sensors carriage. On the Clip-Air project, presented by the École Polytechnique Fédérale de Lausanne in June 2013, modules could even represent independent cabins to transport passengers.

It is further known from the prior art to provide "electro-propulsive modules" distributed along a wingspan of an aircraft wing wherein the propulsion modules are embedded within the wing structure and only a hydrogen storage is removable. It is also known from the prior art to have propulsion modules wherein a wing structure is built around the modules with merged fairings.

WO 2020/003181 A1 discloses a pod for moving a vehicle and also provides a network of interchangeable pods. The pod includes an energy storage and powering machine and a nacelle. The nacelle includes an enclosure for surrounding the energy storage and powering machine and a joining structure for attaching the enclosure to the vehicle. The energy storage and the powering machine include a power generation module, a propulsion module, and an electronics module. The propulsion module includes an electric motor with a propeller module. The electronics module is provided for activating the power generation module to provide electrical energy to the electric motor, wherein the electric motor actuates the propeller module for moving the vehicle.

It is the **object** of the present invention to at least partially overcome the problems associated with the prior art. It is a particular object of the present invention to provide a hydrogen-fuelled, electrically driven aircraft of the above-described type exhibiting an improved operational safety.

The object is achieved by the subject-matter of the independent claims. Advantageous embodiments can be found, e.g., in the dependent claims and/or in the description.

The object is achieved by an aircraft propulsion module, comprising at least
- a hydrogen storage system,
- at least one electrochemical converter connected to the hydrogen storage system, wherein the at least one electrochemical converter is adapted to convert hydrogen supplied from the hydrogen storage system into electric energy, and
- at least one electric motor electrically connected to the at least one electrochemical converter, wherein the electric motor is adapted to generate thrust;
   wherein
- the propulsion module comprises a first part and a second part, each of which comprise a respective fairing;
- the first part and the second part are separable from each other;
- the first part comprises at least one electrochemical converter and at least one electric motor; and
- the second part comprises a hydrogen storage housing of the hydrogen storage system for storing a reusable hydrogen storage unit.

In general, the removable propulsion module provides an independent, autonomous, and removable part ("module") for thrust generation which, in principle, can be adapted on any aircraft. In particular, the propulsion module is not embedded in the wing or the fuselage of the aircraft but can be added to the aircraft structure, e.g., a wing, by means of a simple fastening interface. In particular, the removable propulsion module comprises all means for aircraft propulsion and only needs to be mechanically attached to the aircraft (e.g., by at least one fastening means) and, potentially, can be brought in data communication with the aircraft (e.g., by being equipped with a wired and/or a wireless communication interface) to receive data for its operation and potentially to feedback status data like a fuel level, possible defects, etc.

The hydrogen storage system may be adapted to store gaseous, liquid and/or solid hydrogen. The hydrogen storage system may comprise at least one hydrogen storage unit for physically storing hydrogen, e.g., a hydrogen tank for storing gaseous and/or liquid hydrogen, a dedicated material (e.g., metal hydride, porous carbon, etc.) for chemical or physical solid hydrogen storage, etc. The hydrogen storage system may further comprise a housing for the at least one hydrogen storage unit. The hydrogen storage system may further comprise or be connected to at least one piping network dedicated to supply the at least one electrochemical converter with hydrogen coming from the hydrogen storage unit and/or at least one piping network which allows for external hydrogen refuelling on ground without having to dismount it from the propulsion module (also called "pod") using the dedicated piping network.

In an embodiment, the electrochemical converter comprises at least one fuel cell.

The electric motor is supplied with electric energy from the electrochemical converter. In an embodiment, the electric motor is connected to and thus drives at least one propeller or at least one ducted fan, or even other propulsion means.

It is an embodiment that the propulsion module comprises at least one further means ("electric load") using or storing the electric energy generated by the electrochemical converter. Such an electric load may, for example, include at least one further electric motor (e.g., for moving retractable vortex generators), at least one electric actuator of the separation means (which may also be an electric motor), at least one electric or electronic control means, at least one voltage / current converter, at least one valve, at least one electric switch and/or at least one lamp, etc. It is an embodiment that at least one voltage / current converter is a DC/DC converter, an AC/DC converter, and/or a DC/AC converter. The at least one electric or electronic control means may comprise or be at least one control unit adapted to control operation of at least one of the components of the propulsion module, especially an energy, power, and/or torque management unit, etc. The at least one electric or electronic control means may comprise a microcontroller, ASIC, FPGA, and/or a data communication interface, e.g., an ethernet interface, etc.

It is an embodiment that the propulsion module further comprises at least one electric energy storage unit comprising or being, e.g., at least one rechargeable battery, and/or at least one super capacitor (e.g., a gold cap), etc. This gives the advantage that the at least one electric load of the propulsion module can be supplied with electric energy even if the electrochemical converter generates not enough power (e.g., during peak demand) or is faulty. This also enhances operational safety. In an embodiment, the electric energy storage unit is electrically connected to the electrochemical converter. This gives the advantage that the electric energy storage unit can be charged in flight if the electric power generated by the electrochemical converter is greater than the electric power used by the other components.

Operation of the propulsion module under normal conditions (i.e., without component failure) may comprise at least one operational phase out of the following group of phases:
- "Normal operation": During cruise, descent or taxi, the electrochemical converter is designed to entirely supply the electric motor generating thrust. To this effect, hydrogen is pumped from the storage system to the electrochemical converter and is transformed into electric power by the electrochemical converter.
- "Peak supply": If the power required by the propulsion module, especially the electric motor generating thrust, at a specific flight phase is greater than the maximum power produced by the electrochemical converter, the power difference may be provided by the electric energy storage unit. The electric energy storage unit may be electrically connected in parallel to the electrochemical converter.
- "Recharging": This may be performed on ground or in flight. The electrochemical converter generates electric power, and if the propulsion module needs less power than what the electrochemical converter supplies, the excess electric energy is stored in the electric energy storage unit.
- "Refilling": This only involves the hydrogen storage system. Advantageously, during refilling, the hydrogen storage unit may be separated from the other components so that maintenance tasks on the electric motor and/or on the powertrain equipment, etc. may be performed at the same time as refilling hydrogen. Alternatively, the hydrogen storage unit may remain in the propulsion module and may be refilled via a pipe / piping network of the propulsion module and/or the aircraft.
- "Maintenance": This involves the replacement and/or the inspection of an element and/or a part of the pod on ground. This inspection can be done directly with the pod mounted on the aircraft or by dismounting one element and/or a part of the pod and examining this part and/or element in a workshop. In the meantime, the removed part can be replaced by a fully functional one not to penalize the aircraft.

It is an embodiment that the propulsion module further comprises at least one cooling system. The cooling system may be an active and/or a passive cooling system (or any other form of cooling) and may, in case of an active cooling system, thus also regarded to be an electric load. The cooling system may comprise a heat exchanger.

The first part and the second part can be separated / disconnected from each other, e.g., by actuation of a separation means and/or during maintenance.

The first part comprises the power generating function(s) of the propulsion module. To this effect, the first part comprises at least the at least one electrochemical converter and the at least one electric motor. This gives the advantage that maintenance of components of the first part can be carried out separately from refilling which saves time. The first part may also comprise the electric energy storage unit and the cooling system.

The fairing of the first part gives the advantage that it reduces drag penalty, in particular if the first part is a front part located in front of a wing profile (see also below). Advantageously, the shape of the fairing of the first part is continuous with the wing profile at the contact area, i.e., there are no sharp changes at the transition between the fairing of the first part and the wing profile. Also, the fairing protects the components located in the first part from external damages. In an embodiment, a thrust vector of the propulsion module is aligned with the chord of the wing.

In an embodiment, the first part comprises a support in form of a frame, that is surrounded by the fairing. Fixed / attached to the frame is at least one of the components of the first part, e.g., the at least one electric motor, the at least one electric energy storage unit, and/or the at least one electrochemical converter. Other components of the first part like the cooling system etc. may also be attached / fixed to the frame.

The second part comprises the hydrogen storage system. To this effect, the second part may comprise at least one hydrogen storage unit in its fairing, e.g., a hydrogen tank, and optionally at least one piping network. Its fairing protects the hydrogen storage unit from external damages. The fairing may also create a mechanical link between the wing and the hydrogen storage unit without having to modify the hydrogen storage unit. This is particularly advantageous if an off-the-shelf hydrogen storage unit is used, e.g. an off-the-shelf reusable hydrogen bottle. This in particular reduces the time and tools required to change the hydrogen storage unit with a functional one and/or with a full one.

It is an embodiment that the hydrogen storage unit can be removed from its hydrogen storage unit housing during maintenance operation and be replaced by another similar hydrogen storage unit in case the initial one was malfunctioning. It is an embodiment that this replacement can be done with hydrogen storage unit in any state between full and empty.

In an embodiment, the fairing of the second part can be a hydrogen storage unit housing. This hydrogen storage unit housing may comprise two parts, namely a core and a cap. The core is preferably cylindrical (not necessarily presenting a circular cross-section), one end being open, and the other end presenting a shape matching with one of the hydrogen storage unit's extremities. This end is holed / has a hole to allow a head of the hydrogen storage unit (e.g., a bottle head) to be accessed when the hydrogen storage unit is positioned in the housing. The cap may be cylindrical, one end being open, and the other end being closed. The closed end may comprise drilled holes so that air can circulate, therefore preventing hydrogen accumulation in an enclosed environment.

The hydrogen storage unit may be slid in the core through the open end of the core until the surface of the hydrogen storage unit is in contact with the end of the housing. By now, the hydrogen storage unit's head may, e.g., be sticking out of the hydrogen storage unit housing and can be connected to at least one piping network, in particular of the first part.

When the hydrogen storage unit is inserted into the housing, the cap can be fixed on the core and holds the hydrogen storage system in place.

Alternatively, the hydrogen storage unit housing and the fairing may be two separate parts, wherein the fairing surrounds the housing, e.g., for aerodynamical reasons. In this case, the housing may be attached to the wing and holds the hydrogen storage unit as well as the fairing. Alternatively, the fairing may be attached to the wing and holds the hydrogen storage unit as well as the housing.

In an embodiment, the first part comprises a frame to which the at least one electrochemical converter, the at least one electric motor and the second part, in particular its hydrogen storage housing, are attached.

In an embodiment, the hydrogen storage housing comprises a core and a cap, one end of the core being an open end for inserting the hydrogen storage unit and the other end comprising a hole allowing a head of the hydrogen storage unit to be accessed.

In an embodiment, the cap comprises holes, e.g., drilled holes, to prevent hydrogen accumulation.

In an embodiment, the hydrogen storage housing is adapted to attach the aircraft propulsion module to a wing of an aircraft.

In an embodiment, the hydrogen storage housing is the fairing of the second part.

In an embodiment, the hydrogen storage system comprises at least one piping network adapted to refill the hydrogen storage unit when the hydrogen storage unit is positioned in the hydrogen storage housing.

Regarding the link between the hydrogen storage unit housing or fairing and the wing, a rail may be fixed on the outer side of the storage system's fairing, parallel to the axis of revolution of the cylinder, it presents one or several side rods. A part with respective tracks carved in it may be mounted on the wing. When needed, the hydrogen storage unit housing rail can be slid in the track to fix the hydrogen storage unit housing to the wing. The rail may have a specific shape such that the hydrogen storage unit housing cannot drop due to gravity. Movements may be limited by locks or track ends. For example, one of the following alternative lock systems may be used:
- Rotating lock. In one embodiment of a rotating lock, a piece is attached around an axis and can rotate only following a certain angle using stops. When the hydrogen storage unit housing moves in the track, its side rod comes in contact with an inclined plane of the rotating piece making it turn around its axis while permitting the hydrogen storage unit housing to keep moving. As it keeps moving, the rod is not in contact anymore with the rotating piece, allowing it to go back to its initial state, pushed back by a mechanical device or attracted by gravity. If now the hydrogen storage unit housing moves the other way around, the piece blocks that way and cannot rotate due to the stop. To liberate the hydrogen storage unit housing, an external action is required to push the hydrogen unit system housing, to rotate the lock and to hold it as such while pulling the hydrogen storage unit housing out of the rail.
- Sliding lock. In one embodiment of a sliding lock, a piece is guided by a part on the side of the track. When the hydrogen storage unit housing moves, its side rod enters in contact with an inclined plane of the sliding piece making it go up while permitting the hydrogen storage unit housing to keep moving. As it keeps moving, the rod reaches a notch in the contact plane and the sliding piece can move back to its initial stage, attracted by gravity, or pushed back by a mechanical device, locking up the rod in that notch. The hydrogen storage unit housing is held in position and can neither move forward nor backward. To liberate the hydrogen storage unit housing, an external action is required to push the lock to free the notch and to hold it as such while pulling the hydrogen storage unit housing out of the rail.

The first part and second part are connected via at least one fluid connection line (e.g., a feeding pipe / tube for flowing hydrogen fluid from the second part to the first part). Electric connection lines may be connected to different electronics of the first and/or second part of the module, e.g., for monitoring purposes. Mechanical connection lines may be mechanically connected to certain components and may, e.g., be thin metal wires, plastic cables etc. In the following, fluid connection lines (e.g., for supplying hydrogen), electric connection lines (e.g., for supplying voltage, sending electrical signals, and/or data communication) and mechanical connection lines (e.g., of a components separation means) may collectively called connection lines or "channels".

If the electric motor for generating thrust is connected to a front-side propeller, the first part may be a front part and the second part is a rear part positioned aft of the front part. This enables a particularly compact design.

It is an embodiment that the first part is attached to the second part and/or to the wing. It is an embodiment that the second part is attached to the first part and/or to the wing. If the second part is attached to the wing, it may be positioned underneath the wing profile. It is an embodiment that the first part is only attached to the second part, and the second part is attached to the wing. It is an embodiment that, in this case, the first / front part can be separately dismounted while keeping the second / rear part on the aircraft. It is an embodiment that, in order to dismount the second part of the aircraft, the first part has to be taken out too. It is an embodiment that the hydrogen storage unit can be dismounted from the second part without having to dismount the first part nor the rear part fairing / housing from the wing.

The above-described features and advantages of the invention as well as their kind of implementation will now be schematically described in more detail by at least one embodiment in the context of one or more figures.
- Fig.1: shows a cross-sectional side view of a propulsion module according to another embodiment of the invention;
- Fig.2: shows, in a cross-sectional side view, a sketch of a hydrogen storage system of the propulsion module of Fig.2;
- Fig.3: shows, in a cross-sectional side view, a sketch of a rotating lock to lock a link of a hydrogen storage unit housing system with a wing of an aircraft;
- Fig.4: shows, in a side view, a sketch of a sliding lock to lock a link of a hydrogen storage unit housing with a wing of an aircraft; and
- Fig.5: shows, in an oblique view, a sketch of a link of the hydrogen storage unit housing system and a matching attachment component of the wing.

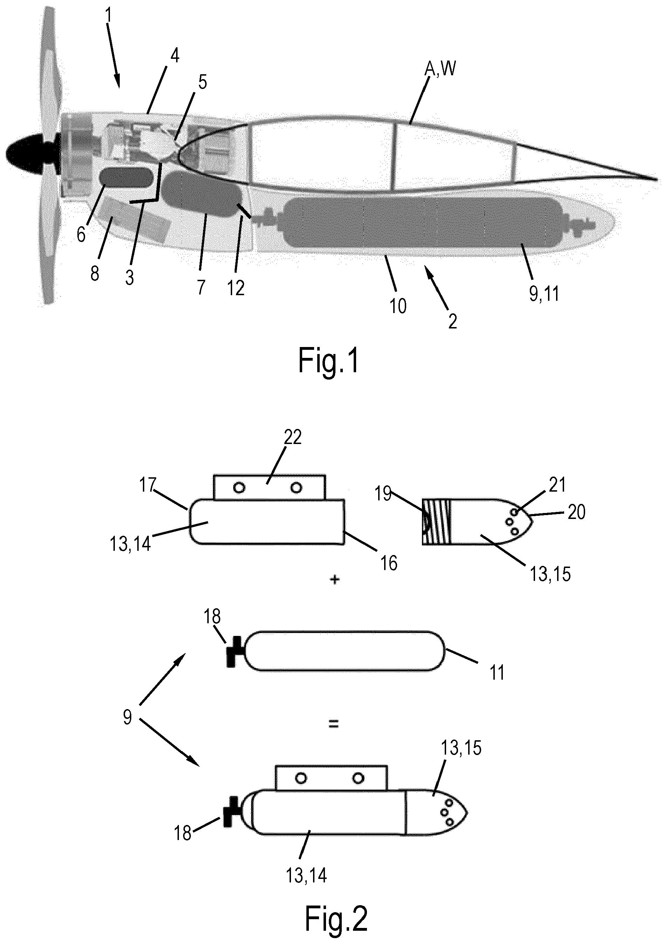

**Fig.1** shows a cross-sectional side view of one possible embodiment of the propulsion module 1, 2.

To reduce costs and maintenance procedures, the propulsion module 1, 2 is divided in several parts.

A first part 1, presenting the power generating part, is attached to a wing (profile) W of an aircraft A to align the thrust vector with the chord of the wing W. It comprises a frame 3 surrounded by a fairing 4 to reduce drag penalty. Fixed / attached to the frame 3 are at least a propulsive device 5 (for example, without loss of generality, a motor / engine / fan), a battery 6, an electrochemical converter in form of a fuel cell 7, and a cooling system 8. Other components may also be fixed to the frame.

A second part 2, which may be placed underneath the wing W, as shown, hosts a hydrogen storage system 9 in a fairing 10. This fairing 10 protects the hydrogen storage system 9 from external damages. It also creates a link between the wing W and the storage system 9 without having to modify the storage system 9. This is particularly advantageous if the storage system 9 uses an off-the-shelf, reusable hydrogen storage unit 11, e.g., a hydrogen bottle.

Both parts 1 and 2 are connected at least via a connection line in form of a feeding channel 12 exchanging hydrogen fluid between the first part 1 and the second part 2. At least one channel may be connected to different elements of the first part 1 and/or second part 2 of the module, e.g., for monitoring purposes.

Operation of the module 1, 2 may comprise at least one out of the group comprising the following five phases:
- "Normal operation": such as, without loss of generality, cruise and/or descent and/or taxi, the fuel cell 6 is designed to entirely supply the electric motor 5, hydrogen is discharged from the storage system 9 and transformed into electric power by the at least one electrochemical converter 7;
- "Peak supply": if the power required by the module 1, 2 at a specific flight phase is greater than the maximum producing power of the electrochemical converter 7, the difference may be provided by the battery 6 in parallel to the electrochemical converter 7;
- "Battery recharging": this task involves both parts of the module and is performed on ground or in flight. The electrochemical converter 7 generates electric power. If the electric motor 5 needs less power than what the electrochemical converter 7supplies, the excess electric energy is stored in the battery 6.
- "Refilling": this task only involves the hydrogen storage system 9. Advantageously, during refilling, the hydrogen storage unit 11 is separated from the other components so maintenance tasks on the motor or on the power generating equipment may be performed at the same time. Alternatively, the hydrogen storage unit 11 may remain in the propulsion module and may be refilled via a pipe / piping network of the propulsion module and/or the aircraft.
- "Maintenance": This involves the replacement and/or the inspection of an element or a part of the propulsion module 1, 2 on ground. This inspection can be done directly with the propulsion module 1, 2 mounted on the aircraft A or by dismounting the one element and/or a part of the propulsion module 1, 2 and examining this part in a workshop. In the meantime, the removed part can be replaced by a fully functional one not to penalize the aircraft A.

The connection between the first part 1 of the propulsion module 1, 2 and the wing should be as compact as possible to reduce the frontal area of the module and thus the drag penalty. In one embodiment, notches may be provided in the wing W to access a wing spar, which makes attachment easier. This embeds the module 1, 2 in the wing W, therefore reducing the frontal area.

When the module 1, 2 generates thrust for the aircraft A, the fastening system should be able to withstand and transfer important loads to the structure. Offsets of the centre of gravity and thrust vectors create torques that should be reacted to as well.

This attachment system should be suitable for every spanwise position, accommodating chord and thickness variations as well as twists and dihedral angles.

As shown in **Fig.2**, the hydrogen storage system 9 may comprise a hydrogen storage unit housing 13 for accommodating the hydrogen storage unit 11. The hydrogen storage unit housing 13 comprises two parts, namely a core 14 and a cap 15. The core 14 is cylindrical (not necessarily presenting a circular cross-section), one end 16 being open and the other end 17 presenting a shape matching with the hydrogen storage unit's extremities. The end 17 is holed to allow a head 18 of the hydrogen storage unit 11 (e.g., a bottle head) to be accessed when the hydrogen storage unit 11 is positioned in the housing 13.

The cap 15 is cylindrical, one end 19 being open and the other end 20 being closed. The end closed end 20 comprises holes 21 so that air can circulate preventing hydrogen accumulation in an enclosed environment.

To store the hydrogen storage unit 11 in the housing 13, it is slid into the core 14 through the open end 16 with its 18 first until the surface of the hydrogen storage unit 11 comes in contact with the end 17 of the core 14. By now, the hydrogen storage unit's head 18 is sticking out of the core 14 and can be connected to supplying and feeding piping network 12. Then, the cap 15 can be fixed to the core 14 at its open end 19, e.g., by screwing it on, and holds the hydrogen storage unit 11 in place.

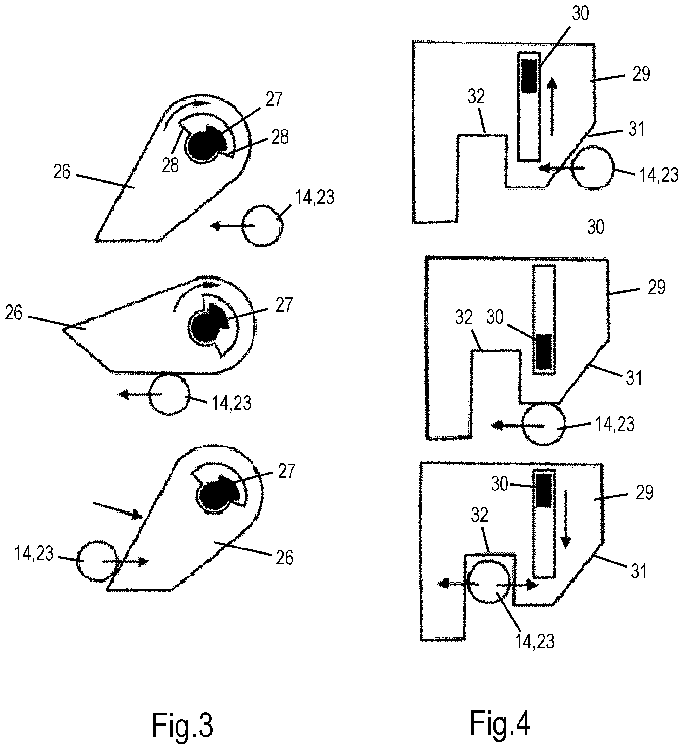

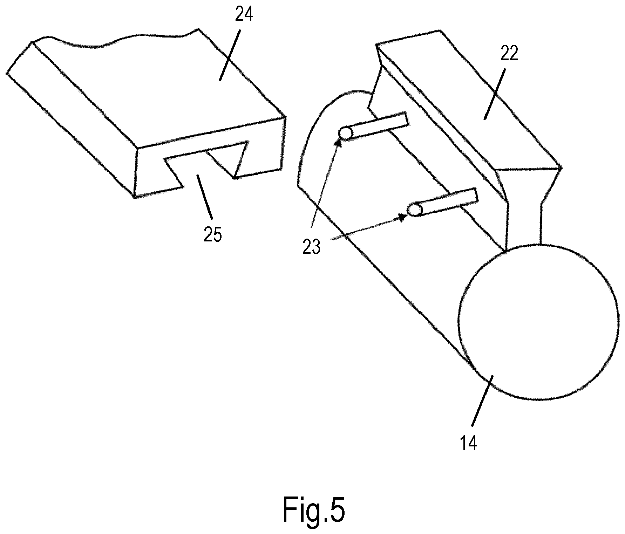

The hydrogen storage unit housing 13, in particular its core 14, comprises an attachment means, e.g., a rail 22, to create a link with the wing W (see also **Fig.5**). The rail 22 is fixed on the outer side of the core 14, parallel to the axis of revolution of the cylindrical core 14, comprising one or more laterally protruding rode ("side rods") 23. A component 24 with at least one track 25 carved in it is mounted on the wing W. When needed, the hydrogen storage unit housing rail 22 can be slid in the track 25 to fix the core 14 of hydrogen storage unit housing 13 to the wing W. The rail 22 has a specific shape so that the hydrogen storage unit housing 13 cannot drop due to gravity. Movements are limited by locks and/or track ends. For example, one of the following alternative lock systems may be used:
- Rotating lock (**Fig.3**): a rotating latch 26 is rotatably attached around an axis 27 of the track component 24 and can rotate only following a certain angle using stops 28. When the rail 22 moves in the track 25, its side rod(s) 23 come(s) in contact with an inclined plane of the rotating latch 26 forcing it rotate around its axis 27 while permitting the core 14 to keep moving. As the side rod 23 keeps moving, the side rod will lose contact with the rotating latch 26, allowing the latch 26 to rotate back to its initial state, e.g., pushed back by a mechanical device (e.g., a spring) or attracted by gravity. If, in this position of the latch 26, the core 14 wants to move in the other direction, the latch 26 blocks that movement while it cannot rotate (counterclockwise in the shown figure) due to the stop. To liberate core 14, an external action is required to push the core 14, to rotate the latch 26 and to hold it open while pulling the rail 22 of the core 14 out of the trach 25.
- Sliding lock (**Fig.4**): a sliding latch 29 of the track component 24 is slidingly guided by a stationary part 30 on the track component 24. When the rail 22 is slid into the track 25, the side rod(s) 23 comes in contact with an inclined plane 31 of the sliding latch 29 causing it to move upwards while permitting the core 14 to keep moving. As the core 14 keeps moving (12), the rod 23 reaches a notch 32 in the contact plane of the latch 29, at which position of the rod 23 the sliding latch 29 moves back to its initial stage, e.g., attracted by gravity or pushed back by a mechanical device, locking up the rod 23 in that notch 32. The core 14 is thus held in position and can neither move forward nor backward. To liberate the core 14, an external action is required to push the latch 29 upward and to hold it as such while pulling the rail 22 out of the track 25.

The wing W may be equipped with one or more tracks 25, their shape will guide the respective rail 22 along the insertion axis and prevent it from moving along the two other axis. Those tracks 25 will be closed at one end.

## Claims

1. An aircraft propulsion module (1, 2) comprising
- a hydrogen storage system (9),
- at least one electrochemical converter (7) connected to the hydrogen storage system, wherein the at least one electrochemical converter is adapted to convert hydrogen supplied from the hydrogen storage system into electric energy, and
- at least one electric motor (5) electrically connected to the at least one electrochemical converter, wherein the electric motor is adapted to generate thrust;
wherein
- the propulsion module comprises a first part (1) and a second part (2), each of which comprise a respective fairing (4, 10);
- the first part and the second part are separable from each other;
- the first part comprises the at least one electrochemical converter and the at least one electric motor; and
- the second part comprises a hydrogen storage housing (14, 15) of the hydrogen storage system for storing a reusable hydrogen storage unit (11).

2. The aircraft propulsion module (1, 2) according to claim 1, wherein the first part comprises a frame (3) to which the at least one electrochemical converter, the at least one electric motor and the second part, in particular its hydrogen storage housing, are attached.

3. The aircraft propulsion module (1, 2) according to any of the preceding claims,
wherein the hydrogen storage housing (14, 15) comprises a core (14) and a cap (15), one end (16) of the core being an open end for inserting the hydrogen storage unit and the other end (17) comprising a hole allowing a head (18) of the hydrogen storage unit to be accessed.

4. The aircraft propulsion module (1, 2) according to claim 3, wherein the cap (15) comprises holes (21).

5. The aircraft propulsion module (1, 2) according to any of the preceding claims,
wherein the hydrogen storage housing is adapted to attach the aircraft propulsion module to a wing (W) of an aircraft (A).

6. The aircraft propulsion module (1, 2) according to any of the preceding claims,
wherein the hydrogen storage housing (14, 15) is the fairing (10) of the second part (2).

7. The aircraft propulsion module (1, 2) according to any of the preceding claims,
wherein the hydrogen storage system comprises at least one piping network (12) adapted to refill the hydrogen storage unit when the hydrogen storage unit is positioned in the hydrogen storage housing.

8. An aircraft (A), comprising at least one aircraft propulsion module (1, 2) according to any of the preceding claims.

9. The aircraft (A) according to claim 8, wherein the hydrogen storage unit, when positioned in the hydrogen storage housing, is connectable to at least one piping network (12) of the aircraft, the at least one piping network being adapted to supply hydrogen from the hydrogen storage unit to at least one electrochemical converter of the aircraft.

10. The aircraft (A) according to any of the claims 8 to 9, wherein the hydrogen storage unit, when positioned in the hydrogen storage housing, is connectable to at least one piping network (12) of the aircraft, the at least one piping network being adapted to refill the hydrogen storage unit with hydrogen from an external source.

## Patentansprüche

1. Flugzeugantriebsmodul (1, 2), aufweisend
- ein Wasserstoffspeichersystem (9),
- mindestens einen elektrochemischen Wandler (7), der mit dem Wasserstoffspeichersystem verbunden ist, wobei der mindestens eine elektrochemische Wandler dazu eingerichtet ist, vom Wasserstoffspeichersystem zugeführten Wasserstoff in elektrische Energie umzuwandeln, und
- mindestens einen Elektromotor (5), der mit dem mindestens einen elektrochemischen Wandler elektrisch verbunden ist, wobei der Elektromotor dazu eingerichtet ist, Schub zu erzeugen;
wobei
- das Antriebsmodul einen ersten Teil (1) und einen zweiten Teil (2) umfasst, die jeweils eine jeweilige Verkleidung (4, 10) umfassen;
- der erste Teil und der zweite Teil voneinander trennbar sind;
- der erste Teil den mindestens einen elektrochemischen Wandler und den mindestens einen Elektromotor umfasst und
- der zweite Teil ein Wasserstoffspeichergehäuse (14, 15) des Wasserstoffspeichersystems zum Unterbringen einer Speichereinheit (11) für wiederverwendbaren Wasserstoff umfasst.

2. Flugzeugantriebsmodul (1, 2) nach Anspruch 1, wobei der erste Teil einen Rahmen (3) aufweist, an dem der mindestens eine elektrochemische Wandler, der mindestens eine Elektromotor und der zweite Teil, insbesondere dessen Wasserstoffspeichergehäuse, befestigt sind.

3. Flugzeugantriebsmodul (1, 2) nach einem der vorstehenden Ansprüche, wobei das Wasserstoffspeichergehäuse (14, 15) einen Kern (14) und eine Kappe (15) umfasst, wobei ein Ende (16) des Kerns ein offenes Ende zum Einsetzen der Wasserstoffspeichereinheit ist und das andere Ende (17) ein Loch aufweist, die Zugriff auf den Kopf (18) der Wasserstoffspeichereinheit ermöglicht.

4. Flugzeugantriebsmodul (1, 2) nach Anspruch 3, wobei die Kappe (15) Löcher (21) aufweist.

5. Flugzeugantriebsmodul (1, 2) nach einem der vorstehenden Ansprüche, wobei das Wasserstoffspeichergehäuse dazu eingerichtet ist, das Flugzeugantriebsmodul an einer Tragfläche (W) eines Flugzeugs (A) zu befestigen.

6. Flugzeugantriebsmodul (1, 2) nach einem der vorstehenden Ansprüche, wobei das Wasserstoffspeichergehäuse (14, 15) die Verkleidung (10) des zweiten Teils (2) ist.

7. Flugzeugantriebsmodul (1, 2) nach einem der vorstehenden Ansprüche, wobei das Wasserstoffspeichersystem mindestens ein Rohrnetzwerk (12) umfasst, das dazu eingerichtet ist, die Wasserstoffspeichereinheit aufzufüllen, wenn die Wasserstoffspeichereinheit im Wasserstoffspeichergehäuse positioniert ist.

8. Flugzeug (A), umfassend mindestens ein Flugzeugantriebsmodul (1, 2) nach einem der vorstehenden Ansprüche.

9. Flugzeug (A) nach Anspruch 8, wobei die Wasserstoffspeichereinheit, wenn sie im Wasserstoffspeichergehäuse positioniert ist, mit mindestens einem Rohrnetzwerk (12) des Flugzeugs verbindbar ist, wobei das mindestens eine Rohrnetzwerk dazu eingerichtet ist, Wasserstoff aus der Wasserstoffspeichereinheit mindestens einem elektrochemischen Wandler des Flugzeugs zuzuführen.

10. Flugzeug (A) nach einem der Ansprüche 8 bis 9, wobei die Wasserstoffspeichereinheit, wenn sie im Wasserstoffspeichergehäuse positioniert ist, mit mindestens einem Rohrnetzwerk (12) des Flugzeugs verbindbar ist, wobei das mindestens eine Rohrnetzwerk dazu eingerichtet ist, die Wasserstoffspeichereinheit mit Wasserstoff aus einer externen Quelle aufzufüllen.

## Revendications

1. Module de propulsion d'aéronef (1, 2), comprenant :
- un système de stockage d'hydrogène (9),
- au moins un convertisseur électrochimique (7) connecté au système de stockage d'hydrogène, l'au moins un convertisseur électrochimique étant conçu pour convertir l'hydrogène fourni par le système de stockage d'hydrogène en énergie électrique, et
- au moins un moteur électrique (5) connecté électriquement à l'au moins un convertisseur électrochimique, le moteur électrique étant conçu pour générer une poussée ;
- le module de propulsion comprenant une première partie (1) et une seconde partie (2), comprenant chacune un carénage (4, 10) respectif ;
- la première partie et la seconde partie étant séparables l'une de l'autre ;
- la première partie comprenant l'au moins un convertisseur électrochimique et l'au moins un moteur électrique ; et
- la seconde partie comprenant un boîtier de stockage d'hydrogène (14, 15) du système de stockage d'hydrogène pour stocker une unité de stockage d'hydrogène réutilisable (11).

2. Module de propulsion d'aéronef (1, 2) selon la revendication 1, dans lequel la première partie comprend un châssis (3) auquel sont fixés l'au moins un convertisseur électrochimique, l'au moins un moteur électrique et la seconde partie, notamment son boîtier de stockage d'hydrogène.

3. Module de propulsion d'aéronef (1, 2) selon l'une quelconque des revendications précédentes, dans lequel le boîtier de stockage d'hydrogène (14, 15) comprend un noyau (14) et un chapeau (15), une extrémité (16) du noyau étant une extrémité ouverte pour insérer l'unité de stockage d'hydrogène et l'autre extrémité (17) comprenant un trou permettant d'accéder à une tête (18) de l'unité de stockage d'hydrogène.

4. Module de propulsion d'aéronef (1, 2) selon la revendication 3, dans lequel le chapeau (15) comprend des trous (21).

5. Module de propulsion d'aéronef (1, 2) selon l'une quelconque des revendications précédentes, dans lequel le boîtier de stockage d'hydrogène est conçu pour fixer le module de propulsion d'aéronef à une aile (W) d'un aéronef (A).

6. Module de propulsion d'aéronef (1, 2) selon l'une quelconque des revendications précédentes, dans lequel le boîtier de stockage d'hydrogène (14, 15) est le carénage (10) de la seconde partie (2).

7. Module de propulsion d'aéronef (1, 2) selon l'une quelconque des revendications précédentes, dans lequel le système de stockage d'hydrogène comprend au moins un réseau de tuyauterie (12) conçu pour remplir l'unité de stockage d'hydrogène lorsque l'unité de stockage d'hydrogène est positionnée dans le boîtier de stockage d'hydrogène.

8. Aéronef (A), comprenant au moins un module de propulsion d'aéronef (1, 2) selon l'une quelconque des revendications précédentes.

9. Aéronef (A) selon la revendication 8, dans lequel l'unité de stockage d'hydrogène, lorsqu'elle est positionnée dans le boîtier de stockage d'hydrogène, peut être raccordée à au moins un réseau de tuyauterie (12) de l'aéronef, l'au moins un réseau de tuyauterie étant conçu pour fournir à au moins un convertisseur électrochimique de l'aéronef de l'hydrogène provenant de l'unité de stockage d'hydrogène.

10. Aéronef (A) selon l'une quelconque des revendications 8 et 9, dans lequel l'unité de stockage d'hydrogène, lorsqu'elle est positionnée dans le boîtier de stockage d'hydrogène, peut être raccordée à au moins un réseau de tuyauterie (12) de l'aéronef, l'au moins un réseau de tuyauterie étant conçu pour remplir l'unité de stockage d'hydrogène avec de l'hydrogène provenant d'une source externe.
